# EUROPÄISCHE PATENTSCHRIFT

(11) **EP 0 936 981 B1**
(45) Veröffentlichungstag und Bekanntmachung des Hinweises auf die Patenterteilung: **18.09.2002**
(21) Anmeldenummer: 97949920.9
(22) Anmeldetag: 10.11.1997
(51) Int. Cl.: B60R 21/20

(54) **GASSACK FÜR EIN AIRBAGMODUL SOWIE VERFAHREN UND VORRICHTUNG ZUR FALTUNG EINES GASSACKS**
GASBAG FOR AN AIRBAG MODULE, METHOD AND DEVICE FOR FOLDING A GAS BAG
SAC A GAZ POUR UN MODULE AIRBAG, ET PROCEDE ET DISPOSITIF DE PLIAGE D'UN SAC A GAZ

(30) Priorität: 15.11.1996 DE 19648654
(43) Veröffentlichungstag der Anmeldung: 25.08.1999
(73) Patentinhaber: TAKATA - PETRI Aktiengesellschaft, 63743 Aschaffenburg (DE)
(72) Erfinder: WERSTAT, Wolfram, D-16321 Bernau (DE); STURM, Andreas, D-14089 Berlin (DE); MARKFORT, Dieter, D-10587 Berlin (DE); MALCZYK, Axel, D-10589 Berlin (DE); ADOMEIT, Heinz-Dieter, D-10623 Berlin (DE)
(74) Vertreter: Bärmann, Klaus, Dipl.-Ing.
(86) Internationale Anmeldenummer: DE9702665
(87) Internationale Veröffentlichungsnummer: WO98022311

(56) Entgegenhaltungen:
- EP-A- 0 523 704
- DE-A- 19 505 507
- DE-C- 19 516 494
- GB-A- 2 279 046
- US-A- 5 300 011
- US-A- 5 360 387
- US-A- 5 496 061
- "SIDE IMPACT AIR BAG AND METHOD FOR FOLDING" RESEARCH DISCLOSURE, Nr. 385, 1.Mai 1996, Seite 329/330 XP000599747

## Beschreibung

Die Erfindung betrifft einen Gassack für ein Airbagmodul nach dem Oberbegriff des Anspruchs 1 sowie ein Verfahren und eine Vorrichtung zur Faltung eines Gassacks. Ein derartiger gefalteter Gassack ist aus der Schrift US-A-5 496 061 bekannt.

Der Gassack eines Airbagmoduls ist in der Ruhelage im Bereich des Gasgenerators gefaltet und wird mittels einer Abdeckkappe gegen den Fahrgastraum des Kraftfahrzeuges abgedeckt. Unabhängig von der Lage des Airbags, d.h. ob es sich um einen Fahrer-, Beifahrer- oder Seitenairbag handelt, unterscheidet sich die Faltungsart nur unwesentlich. So ist in der EP-A-0 705 738 A1 ein Seitenairbag beschrieben, bei dem der Gassack wie bei einem Fahrerairbag seitlich oberhalb des Gasgenerators angeordnet ist. In ähnlicher Weise ist auch ein Gassack eines Seitenairbags gefaltet, wie er aus der EP-A-0 686 531 A1 bekannt ist. Ein so gefalteter Gassack wird bei der Entfaltung durch das aus dem Gasgenerator austretende Gas auseinandergezogen. Dabei werden die äußeren Faltkanten bis zur vollständigen Entfaltung zur Seite und nach vorn verlagert. Während bei einem Fahrerairbag in der Regel eine freie Entfaltung gewährleistet ist, kann die Entfaltung bei einem Beifahrer- und Seitenairbag durch äußere Bauteile behindert werden. Insbesondere treten diese Nachteile bei einem Seitenairbag auf, der sich beträchtlich zur Seite und in die Höhe entfalten muß und dabei durch Teile der Türverkleidung und durch den Sitz behindert wird. Bei dem Seitenairbag besteht deshalb die Gefahr, daß er sich während der Entfaltung an Hindernissen verhakt und durch diese in eine ungewünschte Richtung umgelenkt wird. Neben diesem fehlerhaften Gassackaufbau sowie der fehlerhaften Gassackposition verlängert sich auch die Entfaltungszeit. Der Schutz des Insassen ist deshalb unvollständig und tritt auch zu spät ein.

Aus den Druckschriften DE-PS 195 16 494 C1, US 5,496,061 und EP 0 523 704 A1 ist es bekannt, den Gassack so teleskopartig zu falten, daß sich um eine in den Gassackinnenraum erstreckende Teleskopfalte weitere Teleskopfalten erstrecken, die im wesentlichen quer zur Entfaltungsrichtung verlaufen. Bei dieser Art der Faltung liegen die Falten im Inneren des Gassackes und werden vor dem Kontakt mit in Entfaltungsrichtungen befindlichen Hindernissen geschützt. Die äußerste Falte wird zuerst entfaltet. Mit fortschreitender Entfaltung lösen sich die übrigen Falten von außen nach innen auf und stützen sich an eventuell vorhandenen Hindernissen ab. Das restliche zu entfaltende Faltenpaket wird auf diese Weise ungehindert an die vorgesehene Position transportiert.

Der Erfindung liegt die Aufgabe zugrunde, den Gassack so zu falten, daß eine verbesserte Gassackentfaltung erreicht wird.

Erfindungsgemäß wird das gemäß den Merkmalen des Anspruchs 1 erreicht. Ein Gassack für ein Airbagmodul, wobei der Gassack in der Ruhelage teleskopartig gefaltet ist, in dem sich um eine in den Gassackinnenraum erstreckende Teleskopfalte weitere Teleskopfalten erstrecken, die im wesentlichen quer zur Entfaltungsrichtung verlaufen, weist erfindungsgemäß zusätzlich zur teleskopartigen Faltung mindestens einen Abschnitt auf, der gerafft und/oder chaotisch gefaltet ist.

In einer Ausführungsform ist vorgesehen, daß die Teleskopfalten mindestens teilweise von Knautschfalten umgegeben sind.

In Abhängigkeit der vorgesehenen Entfaltungsrichtung und der vorhandenen Hindernisse kann es zweckmäßig sein, daß die Teleskopfalten unterschiedliche Tiefen und/oder Richtungen aufweisen. Die oberen Faltkanten der Teleskopfalten liegen in einer Ausführungsform im wesentlichen in einer Ebene. Es kann aber zweckmäßig sein, daß die oberen Faltkanten der Teleskopfalten in zueinander geneigten Flächen oder in einer Fläche liegen, die in Richtung der Falten nach außen oder innen gewölbt ist. Hierdurch lassen sich die Reihenfolge und Geschwindigkeit, mit der sich die Faltlagen entfalten, beeinflussen.

Die Teleskopfalten erstrecken sich mindestens von einer Seite des Gassackes in diesen hinein.

Bei Verwendung eines schlauchartigen Gassackes, wie er insbesondere für einen Seitenairbag zweckmäßig ist, erstrecken sich die Teleskopfalten vorzugsweise um dessen Mittellinie. Der Gassack ist bei diesem Verlauf der Falten im gefalteten Zustand in seiner Länge stark verkürzt.

In einer weiteren Ausgestaltung der Erfindung ist vorgesehen, daß in mindestens einer Falte eine Abströmöffnung vorgesehen ist, die verschließbar sein kann.

Weiterhin ist zur Richtungsgebung bzw. zum Abgrenzen einzelner Gassackbereiche innerhalb einer Falte oder zwischen mindestens zwei Falten mindestens eine Heftung bzw. Reißnaht vorgesehen.

Bei einem erfindungsgemäßen Verfahren zur Faltung eines Gassackes ist vorgesehen, daß der Gassack zunächst schrittweise mindestens von einer Seite in den Gassackinnenraum hinein teleskopartig in Falten gelegt wird und daß der Gassack anschließend komprimiert wird, so daß sich das restliche, bisher nicht gefaltete Gassackgewebe um die Teleskopfalten in chaotischen Falten legt.

In einer Ausführungsform des Verfahrens wird der zu faltende Gassack mit Druckluft beaufschlagt und anschließend bis zu einer vorbestimmten Tiefe in den Gassackinnenraum teleskopartig in Falten gelegt. Gleichzeitig oder anschließend wird die Druckluft abgelassen. Die so entstandene erste Teleskopfalte wird gesichert. Anschließend wird der Gassack erneut mit Druckluft beaufschlagt und wird rings um die erste Teleskopfalte erneut teleskopartig in das Gassackinnere gefaltet, wobei gleichzeitig oder anschließend die Druckluft abgelassen wird. Nach Sicherung der ersten und zweiten Teleskopfalte wird der für die zweite Teleskopfalte beschriebene Vorgang bis zum Erreichen der gewünschten Anzahl Falten wiederholt.

In einer weiteren Ausgestaltung des Verfahrens ist vorgesehen, daß in den aufeinanderfolgenden Schritten der Teleskopfaltung unterschiedlich tiefe Faltungen vorgenommen werden und/oder die Teleskopfaltungen in unterschiedlichen Richtungen erfolgen.

Bei einem schlauchartigen Gassack werden die Teleskopfaltungen vorzugsweise in Richtung der Mittellinie des Gassackes vorgenommen.

Eine erfindungsgemäße Vorrichtung zur Faltung eines Gassackes ist dadurch gekennzeichnet, daß ein Gehäuse vorgesehen ist, wobei an einem Ende des Gehäuse innen der Gassack befestigbar ist, indem von diesem Ende aus ein Faltdorn einführbar ist, wobei am anderen Ende des Gehäuses ein in dieses hineinbewegbarer Packstempel vorgesehen ist, in dessen Zentrum eine verschiebbare Faltlanze angeordnet ist, um die sich mindestens ein am Packstempel befestigtes Faltelement erstreckt, und wobei der Faltdorn eine Aussparung aufweist, in die die Faltlanze einführbar ist.

Der Querschnitt des Gehäuses entspricht im wesentlichen dem Querschnitt des Airbagmoduls mit gefaltetem Gassack.

Weiterhin ist es zweckmäßig, am Rand des Packstempels ein an der Innenwand des Gehäuses anliegendes Abstreifelement vorzusehen, das die leichte Verschiebbarkeit des Packstempels im Gehäuse gewährleistet.

Die Erfindung soll in Ausführungsbeispielen anhand von Zeichnungen erläutert werden. Es zeigen:
- Fig. 1 -: eine Draufsicht auf einen Gassack mit zusätzlichen Knautschfalten;
- Fig. 2 -: einen Längsschnitt durch den Gassack nach Fig. 1 gemäß der Linie IV-IV
- Fig. 3a, b: Längsschnitte durch zwei weitere Ausführungsformen des Gassacks ohne Darstellung der Knautschfalten;
- Fig. 4a - 4d: eine Ausführungsform eines Faltwerkzeuges in unterschiedlichen Arbeitsstellungen.

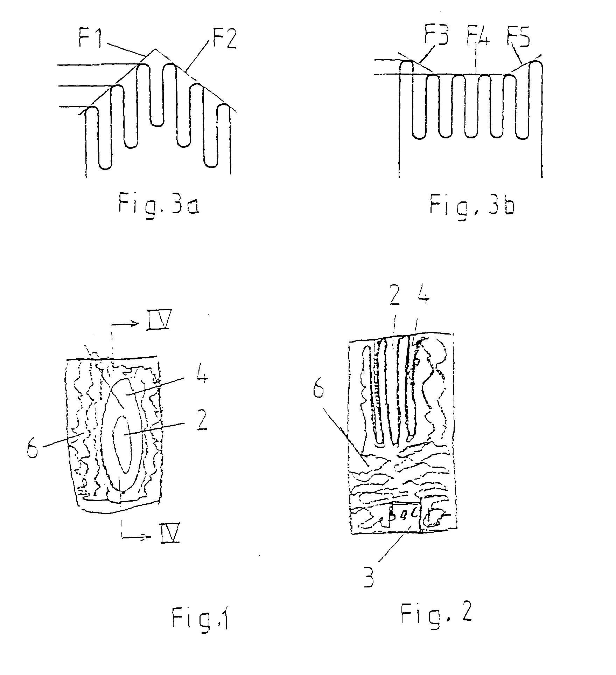

Der Gassack nach den Fig. 1 und 2 weist neben Teleskopfalten 2 und 4 Knautschfalten 6, d.h., chaotische Falten, auf. Diese erstrecken sich rund um die Teleskopfalten 2 und 4 sowie zwischen diesen und einem Gasgenerator 3.

Bei der Ausführungsform der Fig. 2 liegen die oberen Faltkanten der Teleskopfalten 2 und 4 in einer Ebene. Bei der Ausführungsform der Fig. 3a liegen die oberen Faltkanten in zwei schräg zueinander verlaufenden Flächen F1, F2, so daß die mittleren Falten die äußeren Falten zunehmend überragen. Bei der Ausführungsform der Fig. 3b liegen die oberen Faltkanten in drei unterschiedlichen Flächen F3, F4, F5, wobei die äußeren Flächen F3 und F5 schräg zueinander in Richtung des Gassacks verlaufen, so daß die äußeren Falten die inneren Falten überragen.

Aus den Figuren ist ersichtlich, daß die Falten innerhalb des Gassackes liegen. Bei der Entfaltung werden die im Gassackinneren befindlichen Gassackpartien vor dem Kontakt mit in der Entfaltungsrichtung befindlichen Hindernissen geschützt. Während der Entfaltung rollen die einzelnen Falten von innen nach außen und stützen sich an Hindernissen ab. Das restliche zu entfaltende Faltenpaket wird auf diese Weise ungehindert in die vorgesehene Position gebracht.

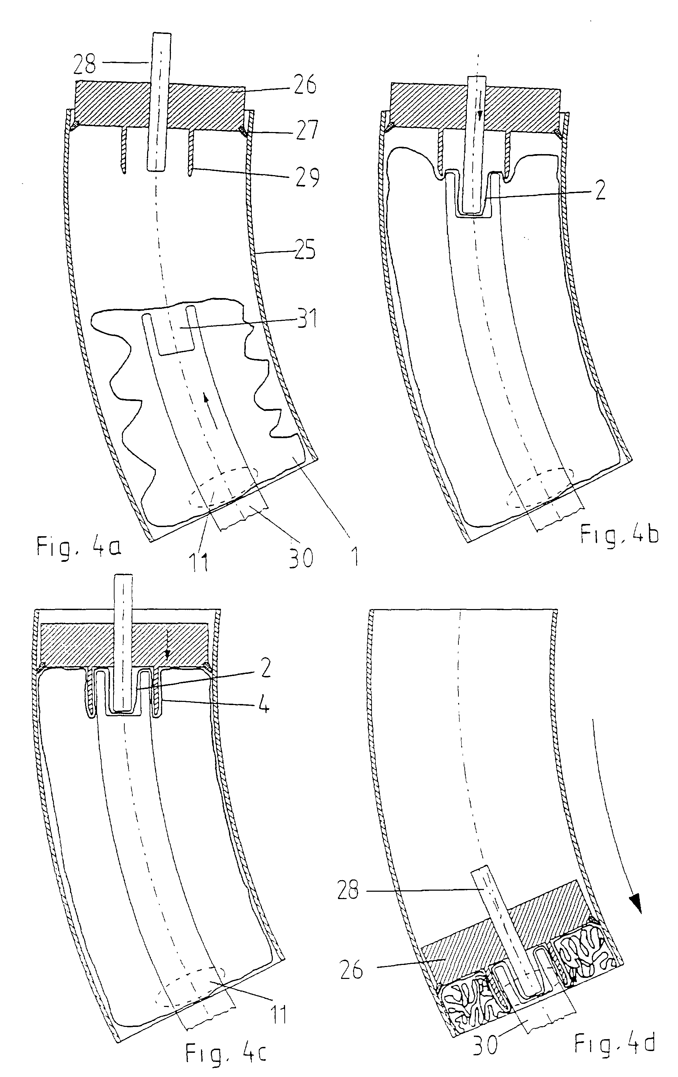

In den Figuren 4a bis 4d ist eine Vorrichtung zur Teleskopfaltung dargestellt, bei der ein Gehäuse 25 vorgesehen ist, dessen Querschnitt im wesentlichen dem Querschnitt des Airbagsmoduls entspricht und daß sich in einer Richtung erstreckt, die im wesentlichen mit der Hauptentfaltungsrichtung des Gassackes übereinstimmt. Im vorliegenden Fall weist die Vorrichtung eine gekrümmte Form auf. Im Gehäuse 25 ist ein Packstempel 26 verschiebbar angeordnet. Dieser weist am Rand ein Abstreifelement 27 auf, das einen für die Verschiebbarkeit notwendigen Zwischenraum zwischen dem Packstempel 26 und dem Gehäuse 25 abdichtet. Im Zentrum des Packstempels 26 ist eine Faltlanze 28 geführt, die relativ zum Packstempel verfahrbar ist. Zwischen der Faltlanze 28 und der Gehäusewand ist am Packstempel 26 ein umllaufendes Faltelement 29 vorgesehen.

Der Packstempel 26 wird von einem Ende des Gehäuses 25 aus in dieses hineinbewegt. Am anderen Ende des Gehäuses ist zentral ein Faltdorn 30 vorgesehen, der in Richtung der Mittellinie des Gehäuses bewegbar ist und an einem Ende, das in das Gehäuse ragt, eine Aussparung 31 aufweist, in die die Faltlanze 28 einführbar ist.

Die Querschnitte des Faltelementes 29, der Faltlanze 28, des Faltdornes 30 und der Aussparung 31 entsprechen im wesentlichen der Kontur der zu erzielenden Teleskopfalten.

Die Faltung erfolgt in der Weise, daß der Gassack 1 in das Gehäuse 25 eingeschoben wird und im unteren Bereich am Gehäuse befestigt wird. Anschließend wird der Faltdorn 30 durch die Einblasöffnung 11 des Gassackes in diesen eingeführt (Fig. 4a) und in seine obere Lage gebracht, wodurch der Gassack 1 gestreckt wird (Fig. 4b). Nunmehr wird die Faltlanze 28 in die Aussparung 31 des Faltdorns 30 bewegt und dabei die erste innere Teleskopfalte 2 gebildet. Anschließend wird das Innere des Gassackes 1 mit Druckluft beaufschlagt und in einem nächsten Schritt wird der Packstempel 26 in Richtung des Faltdorns 30 bewegt, wobei sich das Faltelement 29 über diesen schiebt und dabei die zweite Teleskopfalte 4 bildet (Fig. 4c).

Anschließend werden der Packstempel 26, die Faltlanze 28 und der Faltdorn 30 in Richtung der Einblasöffnung 11 bewegt, so daß der Gassack komprimiert wird (Fig. 4d). Dabei legt sich das restliche, bisher nicht gefaltete Gassackgewebe um die Teleskopfalten in chaotischen Falten.

## Patentansprüche

1. Gassack für ein Airbagmodul, wobei der Gassack in der Ruhelage teleskopartig gefaltet ist, in dem sich um eine in den Gassackinnenraum erstreckende Teleskopfalte weitere Teleskopfalten erstrecken, die im wesentlichen quer zur Entfaltungsrichtung verlaufen,
**dadurch gekennzeichnet,**
**daß** der Gassack zusätzlich zur teleskopartigen Faltung mindestens einen Abschnitt aufweist, der gerafft und/oder chaotisch gefaltet ist.

2. Gassack nach Anspruch 1, **dadurch gekennzeichnet, daß** die Teleskopfalten (2, 4, 5) mindestens teilweise von Knautschfalten (6) umgeben sind.

3. Gassack nach Anspruch 1 oder 2, **dadurch gekennzeichnet, daß** die Teleskopfalten (12, 13, 21) unterschiedliche Tiefen und/oder Richtungen aufweisen.

4. Gassack nach mindestens einem der vorhergehenden Ansprüche, **dadurch gekennzeichnet, daß** die oberen Faltkanten der Teleskopfalten in zueinander geneigten Flächen (F1, F2, F3, F4, F5) oder in einer Fläche liegen, die in Richtung der Falten nach außen oder innen gewölbt ist.

5. Gassack nach mindestens einem der Ansprüche 1 bis 3, **dadurch gekennzeichnet, daß** die oberen Faltkanten der Teleskopfalten im wesentlichen in einer Ebene (E, F4) liegen.

6. Gassack nach mindestens einem der vorhergehenden Ansprüche, **dadurch gekennzeichnet, daß** sich die Teleskopfalten (2, 4, 5, 12, 13, 21) mindestens von einer Seite des Gassackes (1) in diesen erstrecken.

7. Gassack nach mindestens einem der vorhergehenden Ansprüche, **dadurch gekennzeichnet, daß** sich die Teleskopfalten (12, 13, 21) bei einem schlauchartigen Gassack (1) um dessen Mittellinie (7) erstrekken.

8. Gassack nach mindestens einem der vorhergehenden Ansprüche, **dadurch gekennzeichnet, daß** in mindestens einer Falte mindestens eine Abströmöffnung (14) vorgesehen ist.

9. Gassack nach Anspruch 8, **dadurch gekennzeichnet, daß** die Abströmöffnung verschließbar ist.

10. Gassack nach mindestens einem der vorhergehenden Ansprüche, **dadurch gekennzeichnet, daß** innerhalb einer Falte oder zwischen mindestens zwei Falten mindestens eine Reißnaht (15, 16) vorgesehen ist.

11. Verfahren zur Faltung eines Gassackes, insbesondere zur Durchführung der Faltung nach den Ansprüchen 1 bis 10, **dadurch gekennzeichnet, daß** der Gassack zunächst schrittweise mindestens von einer Seite in den Gassackinnenraum hinein teleskopartig in Falten gelegt wird, und daß der Gassack anschließend komprimiert wird, so daß sich das restliche, bisher nicht gefaltete Gassackgewebe um die Teleskopfalten in chaotischen Falten legt.

12. Verfahren nach Anspruch 11, **dadurch gekennzeichnet, daß** der zu faltende Gassack mit Druckluft beaufschlagt wird und anschließend bis zu einer vorbestimmten Tiefe in den Gassackinnenraum hinein teleskopartig gefaltet wird, wobei gleichzeitig oder anschließend die Druckluft abgelassen wird, daß die so entstandene erste Teleskopfalte gesichert wird, daß anschließend der Gassack erneut mit Druckluft beaufschlagt wird und rings um die erste Teleskopfalte erneut in das Gassackinnere teleskopartig gefaltet wird, wobei gleichzeitig oder anschließend die Druckluft abgelassen wird, und daß nach Sicherung der ersten und zweiten Teleskopfalte der für die zweite Teleskopfalte beschriebene Vorgang bis zum Erreichen der gewünschten Anzahl Falten wiederholt wird.

13. Verfahren nach Anspruch 11 oder 12, **dadurch gekennzeichnet, daß** in den aufeinanderfolgenden Schritten der Teleskopfaltung unterschiedlich tiefe Faltungen erzeugt werden und/oder die Teleskopfaltungen in unterschiedlichen Richtungen erfolgen.

14. Verfahren nach mindestens einem der Ansprüche 11 bis 13, **dadurch gekennzeichnet, daß** bei einem schlauchartigen Gassack die Teleskopfaltungen in Richtung der Mittellinie des Gassackes vorgenommen werden.

15. Vorrichtung zur Faltung eines Gassackes, insbesondere zur Durchführung des Verfahrens nach Anspruch 11 bis 14, **dadurch gekennzeichnet, daß** ein Gehäuse (25) vorgesehen ist, wobei an einem Ende des Gehäuses innen der Gassack (1) befestigbar ist, in den von diesem Ende aus ein Faltdorn (30) einführbar ist, wobei am anderen Ende des Gehäuses (25) ein in dieses hineinbewegbarer Packstempel (26) vorgesehen ist, in dessen Zentrum eine verschiebbare Faltlanze (28) angeordnet ist, um die sich mindestens ein am Packstempel befestigtes Faltelement (29) erstreckt, und wobei der Faltdorn (30) eine Aussparung (31) aufweist, in die die Faltlanze (28) einführbar ist.

16. Vorrichtung nach Anspruch 15, **dadurch gekennzeichnet, daß** der Querschnitt des Gehäuses im wesentlichen dem Querschnitt des Airbagmoduls entspricht.

17. Vorrichtung nach Anspruch 15 oder 16, **dadurch gekennzeichnet, daß** am Rand des Packstempels (26) ein an der Innenwand des Gehäuses (25) anliegendes Abstreifelement (27) vorgesehen ist.

## Claims

1. Gas bag for an airbag module wherein the gas bag is folded telescopically in the rest position, in which further telescopic folds extend round a telescopic fold extending into the inner cavity of the gas bag and these further folds run substantially across the unfolding direction
**characterised in that**
the gas bag has in addition to the telescopic folding at least one section which is gathered and/or chaotically folded.

2. Gas bag according to claim 1 **characterised in that** the telescopic folds (2, 4, 5) are enclosed at least in part by crumple folds (6).

3. Gas bag according to claim 1 or 2 **characterised in that** the telescopic folds (12, 13, 21) have different depths and/or directions.

4. Gas bag according to at least one of the preceding claims **characterised in that** the upper folded edges of the telescopic folds lie in surfaces (F1, F2, F3, F4, F5) inclined towards each other or in a surface which is curved inwards or outwards in the direction of the folds.

5. Gas bag according to at least one of claims 1 to 3 **characterised in that** the upper folded edges of the telescopic folds lie substantially in one plane (E, F4).

6. Gas bag according to at least one of the preceding claims **characterised in that** the telescopic folds (2, 4, 5, 12, 13, 21) extend into the gas bag (1) at least from one side of same.

7. Gas bag according to at least one of the preceding claims, **characterised in that** in the case of a tubular gas bag the telescopic folds (12, 13 21) extend round the centre line (7) of same.

8. Gas bag according to at least one of the preceding claims **characterised in that** at least one outflow opening (14) is provided in at least one fold.

9. Gas bag according to claim 8 **characterised in that** the outflow opening is closable.

10. Gas bag according to at least one of the preceding claims, **characterised in that** at least one rip seam (15, 16) is provided in one fold or between at least two folds.

11. Method for folding a gas bag more particularly for carrying out the folding according to claims 1 to 10 **characterised in that** the gas bag is placed telescopically in folds into the inner cavity of the gas bag stepwise at least from one side and that the gas bag is then compressed so that the remaining gas bag fabric which has not yet been folded is placed in chaotic folds round the telescopic folds.

12. Method according to claim 11 **characterised in that** the gas bag to be folded is biased with compressed air and is then folded telescopically up to a predetermined depth into the inner cavity of the gas bag whereby the compressed air is let down simultaneously or subsequently, that the first telescopic fold thus obtained is then secured, that then the gas bag is again biased with compressed air and folded again telescopically into the inside of the gas bag in a ring round the first telescopic fold, whereby at the same time or subsequently the compressed air is let down, and that after securing the first and second telescopic fold the process described for the second telescopic fold is repeated until the desired number of folds is reached.

13. Method according to claim 11 or 12 **characterised in that** in successive stages of the telescopic folding folds of different depth are produced and/or the telescopic folds are made in different directions.

14. Method according to at least one of claims 11 to 13 **characterised in that** in the case of a tubular gas bag the telescopic foldings are made in the direction of the centre line of the gas bag.

15. Device for folding a gas bag, more particularly for carrying out the method according to claims 11 to 14 **characterised in that** a housing (25) is provided wherein the gas bag (1) is fixable at one end of the housing inside and a folding mandrel (30) can be inserted in the gas bag from this end wherein at the other end of the housing (25) is a packing ram (26) which can be moved into same, wherein a displaceable folding lance (28) is mounted in the centre of the ram and at least one folding element (29) fixed on the packing ram extends round the lance and wherein the folding mandrel (30) has a recess (31) into which the folding lance (28) can be inserted.

16. Device according to claim 15 **characterised in that** the cross-section of the housing corresponds substantially to the cross section of the airbag module.

17. Device according to claim 15 or 16 **characterised in that** a stripper element (27) is provided on the edge of the packing ram (26) and adjoins the inner wall of the housing (25).

## Revendications

1. Sac à gaz pour module d'airbag, ledit sac à gaz étant plié en position de repos de manière télescopique en prévoyant que, autour d'une pliure télescopique qui s'étend jusque dans le volume intérieur du sac à gaz, s'étendent d'autres pliures télescopiques qui sont sensiblement perpendiculaires à la direction de déploiement,
**caractérisé en ce que**
en plus du pliage télescopique, le sac à gaz comprend au moins un tronçon qui est tendu et/ou plié de manière aléatoire.

2. Sac à gaz selon la revendication 1, **caractérisé en ce que** les pliures télescopiques (2, 4, 5) sont entourées au moins partiellement par des pliures froissées (6).

3. Sac à gaz selon l'une ou l'autre des revendications 1 et 2, **caractérisé en ce que** les pliures télescopiques (12, 13, 21) présentent des profondeurs et/ou des directions différentes.

4. Sac à gaz selon l'une au moins des revendications précédentes, **caractérisé en ce que** les arêtes de pliage supérieures des pliures télescopiques sont disposées dans des surfaces inclinées les unes par rapport aux autres (F1, F2, F3, F4, F5) ou dans une surface qui est bombée vers l'extérieur ou vers l'intérieur en direction des pliures.

5. Sac à gaz selon l'une au moins des revendications 1 à 3, **caractérisé en ce que** les arêtes de pliage supérieures des pliures télescopiques sont disposées essentiellement dans un plan (E, F4).

6. Sac à gaz selon l'une au moins des revendications précédentes, **caractérisé en ce que** les pliures télescopiques (2, 4, 5, 12, 13, 21) s'étendent au moins depuis un côté du sac à gaz (1) dans celui-ci.

7. Sac à gaz selon l'une au moins des revendications précédentes, **caractérisé en ce que**, dans le cas d'un sac à gaz (1) en forme de tuyau, les pliures télescopiques (12, 13, 21) s'étendent autour de sa ligne médiane (7).

8. Sac à gaz selon l'une au moins des revendications précédentes, **caractérisé en ce qu'**il est prévu au moins une ouverture d'échappement (14) dans l'une au moins des pliures.

9. Sac à gaz selon la revendication 8, **caractérisé en ce que** l'ouverture d'échappement est obturable.

10. Sac à gaz selon l'une au moins des revendications précédentes, **caractérisé en ce qu'**il est prévu au moins une couture arrachable (15, 16) à l'intérieur d'une pliure, ou entre au moins deux pliures.

11. Procédé pour le pliage d'un sac à gaz, en particulier pour mettre en oeuvre le pliage selon les revendications 1 à 10, **caractérisé en ce que** le sac à gaz est tout d'abord disposé par étapes selon des pliures de manière télescopique depuis un côté en pénétrant dans le volume intérieur du sac à gaz, et **en ce que** le sac à gaz est ensuite comprimé, de sorte que le tissu restant du sac à gaz, qui n'a pas été jusqu'alors plié, est disposé autour des pliures télescopiques sous forme de pliures aléatoires.

12. Procédé selon la revendication 11, **caractérisé en ce que** le sac à gaz à plier est alimenté en air comprimé, et ensuite plié jusqu'à une certaine profondeur de manière télescopique vers l'intérieur du volume intérieur du sac à gaz, tout en laissant simultanément ou successivement échapper l'air comprimé, **en ce que** la première pliure télescopique ainsi obtenue est bloquée, **en ce que** le sac à gaz est ensuite de nouveau alimenté en air comprimé, et plié tout autour de la première pliure télescopique de nouveau de manière télescopique jusque dans l'intérieur du sac à gaz, tout en laissant simultanément ou successivement échapper l'air comprimé, et ce qu'après blocage de la première et de la deuxième pliure télescopique, on répète le processus décrit pour la deuxième pliure télescopique jusqu'à atteindre le nombre de pliures désiré.

13. Procédé selon l'une ou l'autre des revendications 11 et 12, **caractérisé en ce que** dans les étapes successives du pliage télescopiques, on produit des pliures de différentes profondeurs et/ou **en ce que** les pliures télescopiques ont lieu dans des directions différentes.

14. Procédé selon l'une au moins des revendications 11 à 13, **caractérisé en ce que**, dans le cas d'un sac à gaz en forme de tuyau, les pliures télescopiques sont effectuées en direction de la ligne médiane du sac à gaz.

15. Appareil pour le pliage d'un sac à gaz, en particulier pour la mise en oeuvre du procédé selon les revendications 11 à 14, **caractérisé en ce qu'**il est prévu un boîtier (25), tel qu'à une extrémité du boîtier on peut fixer à l'intérieur le sac à gaz (1), dans lequel on peut introduire depuis cette extrémité un mandrin de pliage (30), et il est prévu à l'autre extrémité du boîtier (25) un poinçon de compactage (26) déplaçable en pénétration dans ledit boîtier et au centre duquel est agencée une lance de pliage (28) en translation, autour de laquelle s'étend au moins un élément de pliage (27) fixé sur le poinçon de compactage, et **en ce que** le mandrin de pliage (30) comporte un évidement (31) dans lequel peut être introduite la lance de pliage (28).

16. Appareil selon la revendication 15, **caractérisé en ce que** la section du boîtier correspond sensiblement à la section du module d'airbag.

17. Appareil selon l'une ou l'autre des revendications 15 et 16, **caractérisé en ce qu'**il est prévu à la bordure du poinçon de compactage (26) un élément de raclage (26) appliqué contre la paroi intérieure du boîtier (25).
